# EUROPEAN PATENT SPECIFICATION

(11) **EP 2 169 091 B1**
(45) Date of publication and mention of the grant of the patent: **28.11.2018**
(21) Application number: 08778227.2
(22) Date of filing: 10.07.2008
(51) Int. Cl.: C22C 38/00, C22C 38/18, C22C 38/02, C22C 38/04, C22C 38/06, C22C 38/38, C22C 38/22, C22C 38/24, C22C 38/32, C22C 38/28, C22C 38/42, C22C 38/48, C23C 2/06, C23C 2/02, C23C 2/28, C21D 8/02, C21D 9/46, B32B 15/01

(54) **HIGH-STRENGTH HOT-DIP GALVANIZED STEEL SHEET WITH LOW YIELD STRENGTH AND WITH LESS MATERIAL QUALITY FLUCTUATION AND PROCESS FOR PRODUCING THE SAME**
HOCHFESTES FEUERVERZINKTES STAHLBLECH MIT NIEDRIGER STRECKFESTIGKEIT UND GERINGERER MATERIALQUALITÄTSSCHWANKUNG SOWIE HERSTELLUNGSVERFAHREN DAFÜR
FEUILLE D'ACIER GALVANISÉ PAR TREMPAGE À CHAUD, DE HAUTE RÉSISTANCE, AVEC UNE FAIBLE LIMITE ÉLASTIQUE ET AVEC UNE MOINDRE FLUCTUATION DE QUALITÉ DE LA MATIÈRE, ET SON PROCÉDÉ DE FABRICATION

(30) Priority: 11.07.2007 JP 2007181945
(43) Date of publication of application: 31.03.2010
(73) Proprietor: JFE Steel Corporation, Tokyo 100-0011 (JP)
(72) Inventor: ONO, Yoshihiko, Tokyo 100-0011 (JP); KIMURA, Hideyuki, Tokyo 100-0011 (JP); OKUDA, Kaneharu, Tokyo 100-0011 (JP); FUJITA, Takeshi, Tokyo 100-0011 (JP); SAKURAI, Michitaka, Tokyo 100-0011 (JP)
(74) Representative: Grünecker Patent- und Rechtsanwälte PartG mbB
(86) International application number: PCT/JP2008/062876
(87) International publication number: WO 2009/008551

(56) References cited:
- EP-A1- 1 195 447
- EP-A1- 1 367 143
- JP-A- H10 330 903
- JP-A- S55 122 821
- JP-A- 2001 207 237
- JP-A- 2001 247 946
- JP-A- 2001 303 178
- JP-A- 2002 256 386
- JP-A- 2002 322 537
- JP-A- 2003 193 188
- JP-A- 2005 029 867
- JP-A- 2006 052 455
- JP-A- 2006 283 156
- JP-A- 2007 092 131
- JP-A- 2007 107 099
- US-A1- 2006 102 256
- US-B1- 6 306 527
- US-B1- 6 312 536

## Description

### Technical Field

The present invention relates to a high-strength galvanized steel sheet for press forming which is used for automobiles, home electric appliances, and the like through a press forming process, and to a method for manufacturing the steel sheet.

### Background Art

BH steel sheets with 340MPa grade in tensile strength (bake-hardenable steel sheets, simply referred to as "340BH" hereinafter) and IF steel sheets with 270MPa grade in tensile strength (Interstitial Free steel sheets, simply referred to as "270IF" hereinafter), which is ultra-low-carbon steel containing carbide/nitride-forming elements such as Nb and Ti to control the amount of dissolved C, have been applied to automotive outer panels, such as hoods, doors, trunk lids, back doors, and fenders, which are required sufficient dent resistance. In recent years, regarding the increasing requirement of further weight reduction of car bodies, new attempt of applying steel sheet with higher strength and superior dent resistance has been carried out to reduce thickness of the steel sheet for outer panel. Also investigations to improve dent resistance and to decrease the temperature and time of a baking finish process while maintaining the current thickness have been progressed in view of applying higher strength steel sheet.

However, when a solution-hardening element such as Mn, P, or the like is further added to 340BH with a yield strength (YP) of 230 MPa or 270IF with a YP of 180 MPa to strengthen and thin a steel sheet, surface distortion occurs. The term "surface distortion" represents micro wrinkles or wavy patterns produced in a press-formed surface due to an increase in YP. The occurrence of surface distortion impairs the design or design property of a door, a trunk lid, or the like. Therefore, the steel sheet for this application is desired that YP after press forming and baking finish treatment is increased than YP of conventional steel sheet while maintaining extremely low YP before press forming.

In such a background, for example, Patent Document 1 discloses a method for producing a steel sheet having low YP, high work-hardenability WH, and high BH by appropriately controlling the cooling rate after annealing of steel to form a dual phase mainly composed of ferrite and martensite, the steel containing 0.005 to 0.15% of C, 0.3 to 2.0% of Mn, and 0.023 to 0.8% of Cr. In addition, Patent Document 2 discloses a method for satisfying both surface distortion resistance and anti-cracking property of steel containing 0.005 to 0.05% of C and 3% or less of Mn by adjusting the average grain diameter of martensite to 1.5 µm or less, the ratio of martensite in a second phase to 60% or more, and the ratio of the number of martensite grains to 0.7 to 2.4 relative to the number of ferrite grains. Patent Document 3 discloses that a steel sheet with high ductility and low yield ratio YR is produced by appropriately controlling a cooling rate after annealing of steel containing 0.010 to 0.06% of C, 0.5 to 2.0% of Mn, and 1% or less of Cr and increasing the ratio of martensite in a second phase to 80% or more. Further, Patent Document 4 discloses that a low-YP dual phase steel sheet composed of ferrite and martensite is produced by decreasing the C content to 0.02 to 0.033% in steel containing 1.5 to 2.5% of Mn and 0.03 to 0.5% of Cr.

Patent document 5 discloses a cold rolled galvanized galvannealed steel sheet which has a low strength of < 500 MPa, and excellent ductility and stretching formability, having a structure consisting of ferrite and a second phase including martensite, wherein the area ratio of the second phase is <=20%, and the ratio of martensite in the second phase is >=50%.
Patent Document 1: Japanese Examined Patent Application Publication No. 62-40405
Patent Document 2: Japanese Unexamined Patent Application Publication No. 2004-307992
Patent Document 3: Japanese Unexamined Patent Application Publication No. 2001-207237
Patent Document 4: Japanese Unexamined Patent Application Publication No. 2001-303184
Patent Document 5: Japanese Unexamined Patent Application Publication No 2002-322537

### Disclosure of Invention

However, in the dual phase steel sheets described in Patent Documents 1 to 4, hard martensite is dispersed as a strengthening phase, and thus fluctuations of mechanical properties are essentially easy to occur. For example, the volume fraction of a hard second phase significantly varies with several tens ppm of C content in steel and the transition of annealing temperature of 30 to 50°C, and thus mechanical properties significantly vary as compared with conventional 340BH and 270IF which are solid-solution-hardened with Mn and P.

In order to decrease temperature and time of the baking finish process, with reducing the thickness of the sheet, a steel sheet of 490-590MPa in TS grade is required, but, such a high-strength steel sheet has the problem of extremely large variation in mechanical properties.

The steel sheets described in Patent Documents 1 to 4 show 440 MPa in TS and 210 to 260 MPa in YP, and thus YP is suppressed to a low level as compared with the conventional YP level of 320 MPa in solid-solution hardening 440 MPa grade IF steel. The surface distortion in these steel sheets are improved compared with conventional 440 MPa grade IF steel with YP of 320 MPa, however, in the actual press-forming into a door or the like produces, a larger surface distortion still arise as compared with 340BH. Therefore, it is also desired to decrease the absolute value of YP.

The present invention has been achieved for resolving the problems, and an object is to provide a high-strength galvanized steel sheet with low YP and excellent uniformity and a method for producing the same.

The inventors of the present invention conducted investigation on a method for decreasing YP to a general value or lower and decreasing variation ΔYP in YP with changes in a production factor with respect to a conventional high-strength galvanized steel sheet having a dual phase. As a result, the following findings were obtained:
(i) By appropriately controlling the Mn equivalent and the composition ranges of Mn and Cr and further appropriately controlling the heating rate and cooling rate of annealing in a continuous galvanizing line (CGL), an attempt can be made to coarsen a second phase and homogenize a dispersion form even in a thermal history of CGL in which slow cooling is performed after annealing, thereby decreasing both YP and variation of mechanical properties.
(ii) By applying rapid cooling after hot rolling and appropriately controlling a cold rolling reduction, YP in a direction at 45° with the rolling direction can be decreased to a level equivalent to YP in the rolling direction and in a direction perpendicular to the rolling direction, thereby effectively decreasing surface distortion in the surrounding of a car door knob where surface distortion easily occurs.

The present invention has been achieved on the basis of the above-mentioned findings and provides a high-strength galvanized steel sheet according to claim 1 comprising a steel having a composition which contains, by % by mass, 0.01 to 0.12% of C, 0.2% or less of Si, less than 2% of Mn, 0.04% or less of P, 0.02% or less of S, 0.3% or less of sol. Al, 0.01% or less of N, and over 0.3% to 2% of Cr, and which satisfies 2.1 ≤ [Mneq] ≤ 3 and 0.24 ≤ [%Cr]/[%Mn], the balance being composed of iron and inevitable impurities, and having a microstructure consisting of ferrite and as a second phase martensite, pearlite, bainite, retained γ, and carbides, wherein the area ratio of the second phase is 2 to 25%, the area ratio of pearlite or bainite in the second phase is 0% to less than 20%, the average grain diameter of the second phase is 0.9 to 7 µm, and the area ratio of grains with a grain diameter of less than 0.8 µm in the second phase is less than 15%. Herein, [Mneq] represents the Mn equivalent shown by [Mneq] = [%Mn] + 1.3[%Cr] and [%Mn] and [%Cr] represent the contents of Mn and Cr, respectively.

The high-strength galvanized steel sheet of the present invention preferably satisfies 2.2 < [Mneq] < 2.9 and 0.34 ≤ [%Cr]/[%Mn].

Further, 0.005% by mass or less of B is preferably contained. In addition, at least one of 0.15% by mass or less of Mo and 0.2% by mass or less of V is preferably contained. Further, at least one of less than 0.014% by mass of Ti, less than 0.01% by mass of Nb, 0.3% by mass or less of Ni, and 0.3% by mass or less of Cu is preferably contained.

The high-strength galvanized steel sheet of the present invention can be produced by a method for producing a high-strength galvanized steel sheet, according to the claims, the method including hot-rolling and cold-rolling a steel slab having the above-described composition, heating at an average heating rate of less than 3 °C/sec in a temperature range of 680°C to 740°C in CGL, annealing at an annealing temperature of over 740°C to less than 820°C, cooling from the annealing temperature at an average cooling rate of 3 to 20 °C/sec to the temperature of a galvanization bath kept at 450-500 °C, dipping in a galvanization bath or dipping in the galvanization bath and further alloying the coating at a temperature of 500-650 °C for 30 seconds or less, and then cooling at an average cooling rate of 7 to 100 °C/sec.

In the method for producing the high-strength galvanized steel sheet of the present invention, heating is preferably performed at an average heating rate of less than 2 °C/sec in a temperature range of 680°C to 740°C in CGL. Further, hot rolling is preferably performed by starting cooling within 3 seconds after hot rolling, cooling to 600°C or less at an average cooling rate of 40 °C/sec or more, and coiling at a coiling temperature of 400°C to 600°C, and then cold rolling is preferably performed with a rolling reduction of 70 to 85%.

According to the present invention, a high-strength galvanized steel sheet with low YP excellent in uniformity can be produced. The high-strength galvanized steel sheet of the present invention is excellent in resistance to surface distortion and is thus suitable for strengthening and thinning automotive parts.

### Brief Description of Drawings

Fig. 1 is a graph showing a relation between YP and the area ratio of grains with a grain diameter of less than 0.8 µm in a second phase.
Fig. 2 is a graph showing a relation between YP and the heating rate in annealing.

### Best Mode for Carrying Out the Invention

The present invention will be described in detail below. "%" indicating the content of a component represents "% by mass" unless otherwise specified.

### 1) Composition

### C: 0.01 to 0.12%

C is an element necessary for securing a predetermined area ratio of a second phase. When the C content is excessively low, the second phase cannot be secured at a sufficient area ratio, and low YP cannot be achieved. Further, sufficient BH cannot be secured, and the anti-aging property is degraded. In order to secure a sufficient area ratio of the second phase, the C content is required to be 0.01% or more. On the other hand, when the C content exceeds 0.12%, the area ratio of the second phase is excessively increased to increase YP, and ΔYP with the annealing temperature is also increased. In addition, weldability is also degraded. Therefore, the C content is 0.12% or less. The C content is preferably less than 0.08% for achieving lower YP and more preferably less than 0.06% for achieving further lower YP.

### Si: 0.2% or less

Si has the effect of delaying scale formation in hot rolling and improves surface appearance quality when added in a small amount, the effect of appropriately delaying an alloying reaction between ferrite and zinc in a galvanization bath or galvannealing treatment, and the effect of further homogenizing and coarsening the microstructure of a steel sheet. Therefore, Si can be added from this viewpoint. However, when Si is added in an amount exceeding 0.2%, the surface appearance quality is impaired and cause difficulty in application to outer panels, and YP is increased. Therefore, the Si content is 0.2% or less.

### Mn: less than 2%

Mn enhances hardenability, suppresses the formation of pearlite and bainite in cooling and in allying treatment after annealing, and decreases the amount of dissolved C in ferrite. Therefore, from the viewpoint of decreasing YP, Mn is added. However, when the Mn content is excessively high, the second phase is made fine and heterogeneous, and ΔYP with respect to the annealing temperature is increased. That is, when the Mn content is excessively increased, the recrystallization temperature is decreased, and γ grains are finely and nonuniformly produced in fine ferrite grain boundaries immediately after recrystallization or boundaries of recovered grains during recrystallization, thereby increasing the area ratio of the second phase grains with a grain diameter of less than 0.8 µm, which will be described below, in the structure after annealing. As a result, reduction in YP and ΔYP is inhibited. In order to decrease YP and ΔYP with respect to the annealing temperature, the Mn content is necessary to be less than 2%. From the viewpoint of more decreasing ΔYP and YP, the Mn content is preferably less than 1.8%. From the viewpoint of further decreasing ΔYP and YP, the Mn content is preferably less than 1.6%. Although the lower limit of the Mn content is not particularly determined, the Mn content preferably exceeds 0.1% because the Mn content of 0.1% or less causes red shortness due to MnS precipitation and easily causes surface defects.

### P: 0.04% or less

P has the effect of appropriately delaying an alloying reaction between ferrite and zinc in a galvanization bath or galvannealing treatment and the effect of further coarsening the microstructure of a steel sheet. From this viewpoint, P can be added. However, P has a large solution hardening ability and thus significantly increases YP when excessively added. Therefore, the P content is 0.04% or less which has a small adverse effect on an increase in YP.

### S: 0.02% or less

S precipitates as MnS in steel but decreases the ductility of a steel sheet and decreases press formability when added in a large amount. In addition, hot ductility is decreased in hot rolling of a slab, and thus surface defects easily occur. Therefore, the S content is 0.02% or less but is preferably as low as possible.

### sol. Al: 0.3% or less

Al is used as a deoxidizing element or an element for improving the anti-aging property by fixing N as AlN. However, Al forms fine AlN during coiling or annealing after hot rolling to suppress the growth of ferrite grains and slightly inhibit reduction in YP. From the viewpoint of decreasing oxides in steel or improving anti-aging property, Al is preferably added in an amount of 0.02% or more. On the other hand, from the viewpoint of improving the grain growth property, the ferrite grain growth property is improved by increasing the coiling temperature to 620°C or more, but the amount of fine AlN is preferably as small as possible. Therefore, preferably, the sol. Al content is 0.15% or more, and AlN is coarsely precipitated during coiling. However, since the cost is increased when the sol. Al content exceeds 0.3%, the sol. Al content is 0.3% or less. In addition, when the sol. Al content exceeds 0.1%, castabiliy is impaired to cause deterioration of the surface appearance quality. Therefore, the sol. Al content is preferably 0.1% or less for application to exterior panels which are required to be strictly controlled in surface appearance quality.

### N: 0.01% or less

N precipitates during coiling or annealing after hot rolling to form fine AlN and inhibit the grain growth property. Therefore, the N content is 0.01% or less but is preferably as low as possible. In addition, an increase in the N content causes deterioration of the anti-aging property. From the viewpoint of improving the grain growth and anti-aging property, the N content is preferably less than 0.008% and more preferably less than 0.005%.

### Cr: over 0.3% to 2%

Cr is the most important element in the present invention. Since Cr has a small amount of solution hardening and the small effect of making fine martensite and can impart high hardenability, Cr is an element effective in decreasing the absolute value of YP and decreasing ΔYP with respect to the annealing temperature. As described below, the Cr content is required to be controlled according to the Mn content so that [Mneq] and [%Cr]/[%Mn] are in the above-described respective ranges, but the Cr content is necessary to exceed at least 0.3%. In addition, when [Mneq] and [%Cr]/[%Mn] are controlled to [Mneq] > 2.2 and [%Cr]/[%Mn] ≥ 0.34, respectively, which are particularly preferred for decreasing YP and quality variation ΔYP described below, the Cr content is required to exceed at least 0.5%. On the other hand, when the Cr content exceeds 2%, the cost is increased, and the surface appearance quality of a galvanized steel sheet is degraded. Therefore, the Cr content is 2% or less.

### [Mneq]: 2.1 to 3

In order to suppress the formation of pearlite and bainite in cooling and alloying treatment after annealing to decrease YP and ΔYP with respect to the annealing temperature, it is necessary to control [Mneq] to 2.1 or more. Further, from the viewpoint of decreasing the pearlite formation to decrease YP, [Mneq] preferably exceeds 2.2. In order to substantially disappear pearlite and bainite in the thermal history of CGL to decrease YP, [Mneq] more preferably exceeds 2.3. On the other hand, when [Mneq] is excessively increased, the surface appearance quality of the coating is degraded, and the cost is increased by adding large amounts of alloy elements. Therefore, [Mneq] is 3 or less and preferably less than 2.9.

### [%Cr]/[%Mn]: 0.24 or more

From the viewpoint of decreasing YP by coarsening the second phase and homogenizing the dispersion form thereof, it is necessary to control [%Cr]/[%Mn] to 0.24 or more. Further, ΔYP with the annealing temperature is decreased by controlling [%Cr]/[%Mn] to this range. Namely, the formation of pearlite and bainite is suppressed by controlling [Mneq], but when the Mn content is increased even with constant [Mneq], the structure is made fine, failing to decrease variation of mechanical properties. On the other hand, the microstructure can be homogenized and coarsened by controlling [%Cr]/[%Mn] to the predetermined range, and thus a strength change with a change in area ratio of the second phase due to a change in the annealing temperature can be suppressed to a low level. From the viewpoint of decreasing YP and further decreasing ΔYP with the annealing temperature, [%Cr]/[%Mn] ≥ 0.34 is preferred, and a more preferred range is [%Cr]/[%Mn] ≥ 0.44.

The balance includes iron and inevitable impurities, but the elements below may be contained at predetermined contents.

### B: 0.005% or less

Similarly, B can be utilized as an element for enhancing hardenability. Also B has the function to fix N as BN to improve the grain growth property. In particular, in the steel of the present invention, the effect of improving the ferrite grain growth property can be sufficiently exhibited by adding over 0.001% of B, thereby achieving extremely low YP. Therefore, B is preferably added in an amount of over 0.001%. However, when B is excessively added, the microstructure is inversely made fine by the influence of residual dissolved B. Therefore, the B content is preferably 0.005% or less.

### Mo: 0.15% or less

Like Mn and Cr, Mo is an element for enhancing hardenability and can be added for the purpose of improving hardenability or the purpose of improving the surface appearance quality of a galvanized steel sheet. However, when Mo is excessively added, like Mn, the structure is made fine and hard, increasing ΔYP with the annealing temperature. Therefore, in the present invention, Mo is preferably added in the range of 0.15% or less which has the small influence on an increase in YP and ΔYP with the annealing temperature. From the viewpoint of further decreasing YP and ΔYP, the Mo content is preferably less than 0.02% (not added).

### V: 0.2% or less

Similarly, V is an element for enhancing hardenability and can be added for the purpose of improving the surface appearance quality of a galvanized steel sheet. However, when V is added in an amount exceeding 0.2%, the cost is significantly increased. Therefore, V is preferably added in the range of 0.2% or less.

### Ti: less than 0.014%

Ti has the effect of improving the anti-aging property by fixing N and the effect of improving castability.
However, Ti forms fine precipitates of TiN, TiC, Ti(C, N), and the like in steel to inhibit the grain growth property. Therefore, from the viewpoint of decreasing YP, the Ti content is preferably less than 0.014%.

### Nb: less than 0.01%

Nb has the effect of delaying recrystallization in hot rolling to control the texture and decrease YP in a direction at 45 degrees with the rolling direction. However, Nb forms fine NbC and Nb(C, N) in steel to significantly degrade the grain growth property. Therefore, Nb is preferably added in the range of less than 0.01% which has the small influence on an increase in YP.

### Cu: 0.3% or less

Cu is an element mixed when craps or the like are positively utilized and a recycled material can be used as a raw material when Cu is allowed to be mixed, thereby decreasing the production cost. In the present invention, Cu has a small influence on the material quality, but mixing of excessive Cu causes surface flaws. Therefore, the Cu content is preferably 0.3% or less.

### Ni: 0.3% or less

Ni also has a small influence on the material quality of a steel sheet, but Ni can be added from the viewpoint of decreasing surface flaws when Cu is added. However, when Ni is excessively added, surface defecting due to heterogeneity of scales is promoted. Therefore, the Ni content is preferably 0.3% or less.

### 2) Microstructure

The steel sheet microstructure of the present invention consists of ferrite, martensite, pearlite, and bainite and contains small amounts of retained γ and carbides. The method of measuring the morphology of the microstructures is first described.

The area ratio of the second phase was determined by observing a L section (vertical section parallel to the rolling direction) of the steel sheet, which was prepared by polishing and etching with natal, in 12 fields of view with SEM with a magnification of 4000 times power and then image processing of structure photographs. In a structure photograph, a region with a light black contrast was regarded as ferrite, regions including lamellar or dot-sequential carbides formed therein were regarded as pearlite and bainite, and grains with a white contrast were regarded as martensite or retained γ. In addition, dot-like fine grains with a diameter of 0.4 µm or less which were observed in a SEM photograph were mainly composed of carbides according to TEM observation. These fine grains were considered to little influence the material quality because of the very low area ratio, and grains with a diameter of 0.4 µm or less were excluded from evaluation of the area ratio and average grain diameter. Thus, the area ratio and average grain diameter were determined for a structure containing white-contrast grains mainly composed of martensite and lamellar or dot sequential carbides composed of pearlite and bainite. The area ratio of the second phase shows a total area ratio of these microstructures. For spherical grains, the diameters thereof were used for the average grain diameter, while for elliptical grains on a SEM screen, long axis a and single axis b perpendicular to the long axis were measured to determine (a × b)^{0.5} as an equivalent grain diameter. Grains having a slightly rectangular shape were handled in the same manner as elliptical grains, and the long axis and the single axis were measured to determine a grain diameter according to the above equation. When second phases were adjacent to each other, the phases in contact with the same width as a grain boundary were separately counted, while the phases in contact with a larger width than a grain boundary, i.e., in contact with a certain width, were counted as one grain.

### Ferrite and second phase

The steel sheet of the present invention has a structure consisting of ferrite and as the second phase martensite, pearlite, bainite, a small amount of retained γ, and carbides. The area ratio of the carbides is as small as less than 1%. When ferrite grains are excessively coarsened, surface roughness occurs in press forming. Therefore, the ferrite grain diameter is preferably 4 to 15 µm.

### Area ratio of second phase: 2 to 25%

In order to decrease YPEl of the steel sheet to sufficiently decrease YP, it is necessary for the area ratio of the second phase to be 2% or more. This can impart functions required for exterior panels, such as high WH, high BH, and excellent anti-aging property. However, when the area ratio of the second phase exceeds 25%, sufficiently low YP cannot be achieved, and ΔYP with the annealing temperature is increased. Therefore, the area ratio of the second phase is in the range of 2 to 25%.

### Average grain diameter of second phase: 0.9 to 7 µm

As described above, the steel sheet of the present invention has a structure composed of ferrite, and as a second phase martensite, pearlite, bainite, retained γ, and carbides, but mostly composed of ferrite and martensite. When martensite is finely and nonuniformly dispersed, YP is increased. TEM observation indicated that many dislocations imparted by quenching are introduced in the periphery of martensite, and when martensite is finely and nonuniformly dispersed, regions around martensite where dislocations are introduced overlap each other. Such dislocations around martensite have already been entangled, and it is thus considered that the dislocations hardly contribute to initial deformation at low stress. In order to decrease YP, preferably, the grains in the second phase are as large as possible in diameter and dispersed as uniformly as possible. In order to sufficiently decrease YP and ΔYP with the annealing temperature of the high-[Mneq] steel sheet of the present invention, it is necessary that the average grain diameter of the second phase is at least 0.9 µm or more. On the other hand, when the grain diameter of the second phase exceeds 7 µm, it is necessary to significantly coarsen ferrite grains, and surface roughness may occur in press forming. Therefore, the grain diameter of the second phase is 7 µm or less.

In CAL capable of rapid cooling to less than 400°C after annealing, the structure can be frozen by rapid cooling from near 700°C, and the second phase can be relatively coarsely dispersed. However, in the thermal history of CGL in which galvanizing is performed, slow cooling at an appropriate cooling rate is required after annealing, and thus γ → α transformation proceeds during slow cooling in the temperature range of 700°C to 500°C with the result of a fine second phase. In the steel of the present invention, the second phase can be coarsely dispersed even in the thermal history of CGL by appropriately controlling the Mn equivalent, the Cr and Mn composition ranges, and the heating rate in annealing.

### Area ratio of pearlite or bainite in second phase: 0% to less than 20%

When slow cooling is performed after annealing, particularly when alloying treatment is also performed, fine pearlite or bainite is formed mainly adjacent to martensite unless [Mneq] is appropriately controlled, thereby causing variation in ΔYP with the annealing temperature. When the area ratio of pearlite or bainite in the second phase is 0% to less than 20%, sufficiently low YP can be achieved with the result that decreasing ΔYP. Further, the area ratio is preferably 0 to 10%. The area ratio of pearlite or bainite in the second phase represents the area ratio of pearlite or bainite relative to the area ratio of 100 of the second phase.

### Area ratio of grains with diameter of less than 0.8 µm in second phase: less than 15%

As a result of detailed examination on a structure factor for decreasing YP and ΔYP, it was found to be necessary for YP and ΔYP to control the average grain diameter of the second phase and control the presence frequency of the fine second phase. Namely, correlation is observed between YP and ΔYP and the average grain diameter of the second phase. However, for steel sheets having substantially the same second phase grain diameter, a steel sheet having large variation of mechanical properties and a steel sheet having small variation of mechanical properties may be produced. The detail examination of a microstructure of such steel sheets indicates that a steel sheet having a cluster distribution of fine second phase grains with a diameter of less than 0.8 µm exhibits large YP and ΔYP. It was also found that a microstructure in which cluster-like second phases are finely dispersed can be decreased by controlling the heating rate of annealing. This is because when α → γ transformation proceeds before the complete completion of recrystallization, the second phase is produced preferentially adjacent to fine recovered grains and fine ferrite grain boundaries immediately after recrystallization. However, when the heating rate is decreased, the second phase is produced after recrystallization is sufficiently completed, and thus the second phase is mainly produced at a triple point of ferrite grain boundaries and uniformly and coarsely dispersed.

Steel containing 0.024% of C, 0.01% of Si, 1.8% of Mn, 0.01% of P, 0.01% of S, 0.04% of sol. Al, 0.55% of Cr, and 0.003% of N was molten in a laboratory to produce a slab of 27 mm in thickness. The slab was heated to 1250°C, hot-rolled to 2.3 mm at a finish rolling temperature of 830°C, and then coiled for 1 hour at 620°C. The resultant hot-rolled sheet was cold-rolled to 0.75 mm with a rolling rate of 67%. The resultant cold-rolled sheet was annealed at 770°C for 40 seconds at an average heating rate changed from 0.3 to 20 °C/sec in the range of 680°C to 740°C, cooled from the annealing temperature to 470°C (galvanization bath temperature) at an average cooling rate of 6 °C/sec, galvanized, galvaneealed of 530°C × 20 sec by heating from 470°C to 530°C at 15 °C/sec, and then cooled to a temperature region of 100°C or lower at an average cooling rage of 30 °C/sec. A JIS No. 5 tensile test piece was obtained from the resultant steel sheet and subjected to a tensile test (according to JISZ2241, the tensile direction perpendicular to the rolling direction). In addition, the microstructure was observed with SEM to determine the area ratio of the second phase.

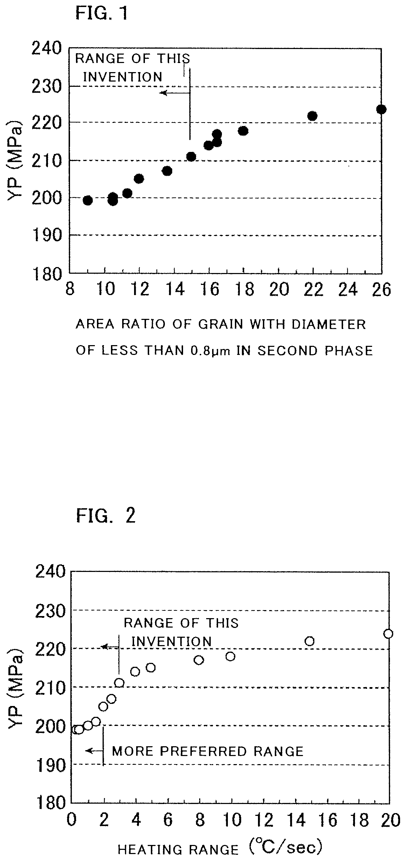

Fig. 1 shows a relation between YP and the area ratio of grains with a diameter of less than 0.8 µm in the second phase. When the area ratio of grains with a diameter of less than 0.8 µm in the second phase is less than 15%, YP is decreased to 210 MPa or less, while when the area ratio is less than 12%, YP is decreased to 205 MPa or less. Further, as a result of measurement of ΔYP by changing the annealing temperature from 760°C to 810°C, it was found that in a sample (heating rate: 20 °C/sec) containing of grains with a diameter of less than 0.8 µm at an area ratio of 26% in the second phase, ΔYP is 24 MPa, while in a sample (heating rate: less than 3 °C/sec) containing of grains with a diameter of less than 0.8 µm at an area ratio of less than 15% in the second phase, ΔYP is decreased to 15 MPa.

Therefore, a steel sheet with low YP and low ΔYP with the annealing temperature can be produced by decreasing the amount of grains of less than 0.8 µm produced. In the present invention, therefore, the area ratio of grains with a diameter of less than 0.8 µm in the second phase is less than 15%. From the viewpoint of further decreasing YP and ΔYP with the annealing temperature, the area ratio is preferably less than 12%. Like in the above-mentioned measuring method, the area ratio of grains with a diameter of less than 0.8 µm in the second phase represents the area ratio of grains with a diameter of less than 0.8 µm relative to the area ratio of 100 of the second phase.

### 3) Production condition

As described above, the steel sheet of the present invention can be produced by the method as defined in the claims, including hot-rolling and cold-rolling a steel slab having the above-described composition, heating at an average heating rate of less than 3 °C/sec in a temperature range of 680°C to 740°C in CGL, annealing at an annealing temperature of over 740°C to less than 820°C, cooling from the annealing temperature at an average cooling rate of 3 to 20 °C/sec to the temperature of a galvanization bath kept at 450-500 °C, dipping in a galvanization bath or dipping in the galvanization bath and further alloying the coating at a temperature of 500-650 °C for 30 seconds or less, and then cooling at an average cooling rate of 7 to 100 °C/sec.

### Hot rolling

The slab can be hot-rolled by a method of rolling the slab after heating, a method of directly rolling the slab without heating after continuous casting, or a method of rolling the slab by heating for a short time after continuous casting. The hot rolling may be performed according to a general method, for example, at a slab heating temperature of 1100°C to 1300°C, a finish rolling temperature of Ar₃ transformation point or more, an average cooling rate after finish rolling of 10 to 200 °C/sec, and a coiling temperature of 400°C to 720°C. In order to obtain excellent zinc coating appearance quality for an automotive outer panel, preferably, the slab heating temperature is 1200°C or less, and the finish rolling temperature is 840°C or less. In addition, descaling is preferably sufficiently performed for removing primary and secondary scales formed on the surface of the steel sheet. From the viewpoint of decreasing YP, the coiling temperature is preferably as high as possible and 640°C or more. When the coiling temperature is 680°C or more, Mn and Cr can be sufficiently concentrated in the second phase in the state of the hot-rolled sheet, and stability of γ in the subsequent annealing step is improved, contributing to a decrease in YP.

On the other hand, when the steel sheet is applied to outer panels, such as door panel with door knob, having a shape in which material inflow and material shrinkage in a direction at 45° greatly influence the surface distortion of an embossing periphery, it is considered effective for decreasing the surface distortion to suppress YP in the direction at 45°. In this application, preferably, cooling in hot rolling is started within 3 seconds after finish rolling and performed to 600°C or less at an average-cooling rate of 40 °C/sec or more, followed by coiling at a coiling temperature of 400°C to 600°C. Under these hot rolling conditions, a fine low-temperature transformed phase mainly composed of bainite can be produced at an area ratio of 30% or more, and the development of a texture in which YP in the direction at 45° is relatively suppressed can be promoted. When a dual phase steel sheet composed of C, Mn, and Cr is produced according to a general method, YP (YP_{D}) in the direction at 45° generally tends to be 5 to 15 MPa higher than YP (YP_{L}) in the rolling direction and YP (YP_{C}) in a direction perpendicular to the rolling direction. However, the above-described hot-rolling conditions can suppress to the range of -10 ≤ YP_{D} - YP_{C} ≤ 5 MPa.

### Cold rolling

The rolling reduction of cold rolling may be 50% to 85%. YP_{C} is decreased by decreasing the rolling rate to 50% to 65%. However, YP in the direction at 45° is relatively increased by decreasing the rolling rate, thereby increasing anisotropy. Therefore, for a steel sheet for application such as a door knob, the rolling rate is preferably 70% to 85%.

### CGL

The steel sheet after cold rolling is annealed and galvanized in CGL. In order to uniformly disperse the coarse second phase after annealing and decrease ΔYP with the annealing temperature, it is effective to control the heating rate in the temperature region of 680°C to 740°C during annealing.

Fig. 2 shows a relation between YP and the heating rate in the temperature region of 680°C to 740°C during annealing. The results of Fig. 2 were obtained by arranging data of an experiment conducted for leading to the results shown in Fig. 1. Fig. 2 indicates that at the heating rate of less than 3 °C/sec, YP of 210 MPa or less can be obtained, while at the heating rate of less than 2 °C/sec, YP of 205 MPa or less can be obtained. When the heating rate is less than 3 °C/sec, the formation of γ grains in ferrite grain boundaries which remain unrecrystallized can be suppressed, and the formation of the fine second phase can be suppressed, thereby decreasing YP. When the heating rate is less than 2 °C/sec, nucleation of γ from unrecrystallized ferrite can be suppressed, and recrystallized ferrite grains can be sufficiently grown. Therefore, the structure is further homogenized and coarsened, thereby further decreasing YP and ΔYP.

The annealing temperature is over 740°C to less than 820°C. At the annealing temperature of 740°C or lower, the area ratio of the second phase cannot be secured because of insufficient solid solution of carbides. At the annealing temperature of 820°C or more, the γ ratio is excessively increased in annealing, and elements such as Mn, C, and the like are not sufficiently concentrated in γ grains, thereby failing to achieve sufficiently low YP. This is possibly because when elements are not sufficiently concentrated in γ grains, strain is not sufficiently applied to the periphery of martensite, and pearlite and bainite transformation easily occurs in the cooling step. The holding time during annealing is preferably 20 seconds or more in the temperature range of over 740°C which corresponds to usual continuous annealing, and is more preferably 40 seconds or more. After soaking, cooling is performed at an average cooling rate of 3 to 20 °C/sec from the annealing temperature to the temperature of the galvanization bath kept at 450°C to 500°C. When the cooling rate is lower 3 °C/sec, large amounts of pearlite and bainite are formed in the second phase because of the passage through the pearlite nose in the temperature region of 550°C to 650°C, thereby failing to achieve sufficiently low YP. On the other hand, when the cooling rate is larger than 20 °C/sec, elements such as Mn, Cr, C, and the like are not sufficiently concentrated in γ grains during γ → α transformation in the temperature region of the annealing temperature to 650°C, and pearlite is easily produced in alloying treatment. In addition, decrease of the dissolved C in ferrite resulted from γ → α transformation and carbide precipitation in the temperature region of 480°C to 550°C cannot be sufficiently promoted, and YP cannot be sufficiently decreased.

Then, the steel sheet is dipped in the galvanization bath, and if required, alloying treatment can be also performed by keeping in the temperature region of 500°C to 650°C for 30 seconds or less. With a conventional steel sheet in which [Mneq] is not appropriately controlled, the mechanical properties are significantly degraded by the galvannealing treatment. However, with the steel sheet of the present invention, YP is slightly increased, and good mechanical properties can be obtained. After dipping in the galvanization bath or galvannealing treatment, cooling is performed at an average cooling rate of 7 to 100 °C/sec. At the cooling rate of lower than 7 °C/sec, pearlite is produced near 550°C, and bainite is produced in the temperature region of 400°C to 450°C, increasing YP. On the other hand, at the cooling rate of higher than 100 °C/sec, self-tempering of martensite which takes place in continuous cooling is insufficient, and thus martensite is excessively hardened, thereby increasing YP and decreasing ductility.

The resultant galvanized steel sheet has YPE1 of less than 0.5% and sufficiently decreased YP in a galvanized state and thus can be used directly as a steel sheet for press forming as long as the area ratio of the second phase, the average grain diameter of the second phase, the area ratio of grains with a grain diameter of less than 0.8 µm in the second phase, and the area ratio of pearlite and bainite are controlled according to the present invention. However, as described above, from the viewpoint of controlling surface roughness and stabilizing press formability by flattening a shape of steel sheet, skin-pass rolling is generally performed. In this case, from the viewpoint of decreasing YP and increasing El and WH, the elongation is preferably 0.3% to 0.5%.

### EXAMPLES

### EXAMPLE 1

Steel of each of Steel Nos. A to CC shown in Table 1 was molten and continuously cast into a slab of 230 mm in thickness. The slab was reheated to 1180°C to 1250°C and hot-rolled at a finish rolling temperature of 830°C (Steel Nos. A to D, G to U, and X to CC), 870°C (Steel Nos. E and V), or 900°C (Steel Nos. F and W). Then, the hot rolled band was cooled at an average cooling rate of 20 °C/sec and coiled at a coiling temperature of 640°C. The resultant hot-rolled sheet was cold-rolled with a rolling reduction of 67% to form a cold-rolled sheet of 0.75 mm in thickness. The resultant cold-rolled sheet was annealed in CGL at the average heating rate in the temperature range of 680°C to 740°C, the annealing temperature AT, and the cooling rate shown in Tables 2 and 3 and galvanized in a cooling step. Cooling from the annealing temperature AT to the galvanization bath temperature of 460°C is primary cooling, and cooling from the galvanization bath temperature or the alloying temperature when alloying was performed is second cooling. Tables 2 and 3 show the average cooling rate of each of the primary cooling and second cooling. Alloying treatment was performed by heating to 510°C to 530°C at an average heating rate of 15 °C/sec after dipping in the galvanization bath and maintaining for 10 to 25 seconds so that the Fe content in the coating was in the range of 9 to 12%. Both surfaces were coated with a coating weight of 45 g/m² per one side. The resultant galvanized steel sheet was sampled in an untempered state (without skin pass rolling)

The obtained sample was examined with respect to the area ratio of the second phase, the average grain diameter of the second phase, the area ratio of pearlite or bainite in the second phase, and the area ratio of grains with a grain diameter of less than 0.8 µm in the second phase. Further, a JIS No. 5 test piece was collected in the rolling direction and the perpendicular direction and subjected to a tensile test (according to JISZ2241) to evaluate YP and TS. In addition, the annealing temperature for the steel sheet with each of the compositions was changed in the range of 760°C to 810°C to measure the maximum and minimum of YP and determine variation ΔYP of YP.

The results are shown in Tables 2 and 3.

The steel sheet of an example of the present invention exhibits small ΔYP as compared with a material in the same TS level. The steel sheet of an example of the present invention also has YP which is equivalent to or lower than YP of conventional steel, i.e., low YR. For example, in the 440-MPa TS class (440 to less than 490) steel sheet, ΔYP is suppressed to 15 MPa or less, and YP is also as low as 206 MPa. In the 490-MPa TS class (440 to less than 540) steel sheet, ΔYP is suppressed to 20 MPa, while in the 590-MPa TS class steel sheet, ΔYP is suppressed to 32 MPa. In particular, in the steel sheet in which [Mneq] and [%Cr]/[%Mn] are appropriately controlled to over 2.2 and 0.34 or more, respectively, the ratio of fine grains with a grain diameter of less than 0.08 µm in the second phase is decreased, the formation of pearlite and bainite is suppressed, and solution hardening by Mn and dissolved C is decreased, thereby decreasing YP and ΔYP. For example, in the steel of Steel No. B, [Mneq] is increased as compared with the steel of Steel No. A, but [%Cr]/[%Mn] is in the range of 0.27 to 0.33. Therefore, although the amounts of pearlite and bainite produced are decreased with increase in [Mneq], the microstructure is made fine and YP is in the range of 202 to 203 MPa and ΔYP in the range of 11 to 15 MPa under the conditions with a heating rate of 1.5 °C/sec and an annealing temperature of 775°C. On the other hand, in the steel of Steel Nos. C, E, F, Z, and AA in each of which [Mneq] is increased to over 2.2 and [%Cr]/[%Mn] is controlled to 0.34 or more, YP and ΔYP are in the range of 182 to 198 MPa and the range of 5 to 9 MPa, respectively, and very low under the conditions including a heating rate of 1.5 °C/sec, an annealing temperature of 775°C to 805°C, and a primary cooling rate of 4 to 5 °C/sec. Further, when [Mneq] is constant, ΔYP decreases as [%Cr]/[%Mn] increases. In such steel, a change in YP due to the alloying treatment is significantly suppressed. For example, in the steel sheet prepared from Steel No. C at a heating rate of 1.5 °C/sec and an annealing temperature of 775°C, a change in YP due to alloying treatment is as low as 2 MPa, and an increase in YP by alloying treatment is suppressed. Namely, the steel sheet of an example of the present invention can exhibit good mechanical properties even after galvannealing treatment and is suitable for application in which alloying treatment is performed. In addition, an increase in YP due to an increase in C is extremely small, and in Steel Nos. H and I, YP is suppressed to 219 MPa or less even when C is increased to 0.051%. Further, in 590-MPa TS class Steel No. J containing 0.108% of C, YP is suppressed to 262 MPa, and a steel sheet with low YR can be stably obtained. Further, in Steel Nos. F, BB, and CC containing over 0.001% of B, ferrite grains and the second phase are coarsened, and YP (or YR) and ΔYP are suppressed to low levels. For example, in comparison between AA and BB, [%Cr]/[%Mn] is substantially the same, but YP and ΔYP of BB containing B are lower than AA in spite of low [Mneq].

However, a steel sheet in which the heating rate and cooling rate in annealing are not appropriately controlled to produce a large amount of fine grains with a diameter of less than 0.8 µm in the second phase and a steel sheet in which pearlite and bainite are produced in large amounts have large ΔYP and large YP absolute value as compared with the steel sheet of an example of the present invention in the same strength level. For example, in Steel Nos. P and W having low [Mneq], large amounts of pearlite and bainite are produced, and YP and ΔYP are large as compared with the steel sheet of an example of the present invention in the same strength level. Further, in Steel Nos. Q, T, and U in which [%Cr]/[%Mn] is not appropriately controlled while [Mneq] is in the predetermined range, martensite is fine and the amount of solution hardening is large, thereby increasing YP and ΔYP. Steel No. R containing Mo has the tendency to form a fine microstructure, increasing ΔYP. With Steel No. S in which the C content is out of the predetermined range, and consequently the area ratio of the second phase is out of the predetermined range, low YR cannot be achieved. In Steel Nos. X and Y containing large amounts of P and Si, the microstructure is coarsened, but the absolute value of YP is increased because the amount of solid-solution hardening is excessively increased.

**Table 1**

| | | | | | | | | | (% by mass) | | | |
|---|---|---|---|---|---|---|---|---|---|---|---|---|
| Steel No. | C | Si | Mn | P | S | sol.Al | N | Cr | others | [Mneq] | [%Cr]/[%Mn] | Remarks |
| A | 0.024 | 0.01 | 1.53 | 0.006 | 0.002 | 0.02 | 0.0020 | 0.51 | - | 2.19 | 0.33 | Invention steel |
| B | 0.020 | 0.01 | 1.80 | 0.007 | 0.003 | 0.03 | 0.0021 | 0.49 | - | 2.44 | 0.27 | Invention steel |
| C | 0.029 | 0.02 | 1.48 | 0.008 | 0.001 | 0.04 | 0.0022 | 0.74 | - | 2.44 | 0.50 | Invention steel |
| D | 0.029 | 0.01 | 1.46 | 0.004 | 0.010 | 0.03 | 0.0022 | 1.08 | - | 2.86 | 0.74 | Invention steel |
| E | 0.030 | 0.01 | 1.02 | 0.009 | 0.003 | 0.04 | 0.0020 | 1.20 | - | 2.58 | 1.18 | Invention steel |
| F | 0.042 | 0.01 | 0.65 | 0.010 | 0.005 | 0.03 | 0.0025 | 1.42 | B:0.0015 | 2.50 | 2.18 | Invention steel |
| G | 0.013 | 0.02 | 1.69 | 0.008 | 0.012 | 0.08 | 0.0026 | 0.66 | - | 2.55 | 0.39 | Invention steel |
| H | 0.017 | 0.02 | 1.52 | 0.008 | 0.001 | 0.02 | 0.0015 | 0.81 | - | 2.57 | 0.53 | Invention steel |
| I | 0.051 | 0.01 | 1.48 | 0.009 | 0.014 | 0.05 | 0.0012 | 0.82 | - | 2.55 | 0.55 | Invention steel |
| J | 0.108 | 0.10 | 1.42 | 0.011 | 0.012 | 0.04 | 0.0009 | 1.08 | B:0.0010 | 2.82 | 0.76 | Invention steel |
| K | 0.029 | 0.08 | 1.45 | 0.011 | 0.015 | 0.07 | 0.0015 | 0.82 | - | 2.52 | 0.57 | Invention steel |
| L | 0.031 | 0.01 | 1.22 | 0.011 | 0.003 | 0.04 | 0.0015 | 0.88 | B:0.0028 | 2.36 | 0.72 | Invention steel |
| M | 0.029 | 0.01 | 1.40 | 0.009 | 0.005 | 0.03 | 0.0018 | 0.80 | Mo:0.07,V:0.1 | 2.44 | 0.57 | Invention steel |
| N | 0.030 | 0.02 | 1.35 | 0.008 | 0.004 | 0.07 | 0.0016 | 0.85 | Ti:0.01,B:0.0009 | 2.46 | 0.63 | Invention steel |
| O | 0.030 | 0.01 | 1.40 | 0.007 | 0.004 | 0.04 | 0.0018 | 0.80 | Cu:0.1,Ni:0.1,Nb^{:}0.003 | 2.44 | 0.57 | Invention steel |
| P | 0.029 | 0.01 | 1.52 | 0.012 | 0.004 | 0.04 | 0.0035 | 0.30 | - | 1.91 | 0.20 | Comparative steel |
| Q | 0.019 | 0.01 | 2.05 | 0.010 | 0.005 | 0.02 | 0.0025 | 0.40 | - | 2.57 | 0.20 | Comparative steel |
| R | 0.023 | 0.01 | 1.62 | 0.011 | 0.004 | 0.04 | 0.0025 | 0.55 | Mo:0.28 | 2.34 | 0.34 | Comparative steel |
| S | 0.008 | 0.01 | 1.42 | 0.012 | 0.004 | 0.04 | 0.0020 | 0.78 | - | 2.43 | 0.55 | Comparative steel |
| T | 0.039 | 0.01 | 2.08 | 0.013 | 0.006 | 0.03 | 0.0029 | 0.18 | - | 2.31 | 0.09 | Comparative steel |
| U | 0.085 | 0.01 | 2.08 | 0.013 | 0.006 | 0.03 | 0.0029 | 0.18 | - | 2.31 | 0.09 | Comparative steel |
| V | 0.037 | 0.01 | 1.00 | 0.010 | 0.008 | 0.02 | 0.0018 | 0.84 | - | 2.09 | 0.84 | Comparative steel |
| W | 0.045 | 0.01 | 0.20 | 0.006 | 0.008 | 0.04 | 0.0024 | 1.35 | - | 1.96 | 6.75 | Comparative steel |
| X | 0.029 | 0.01 | 1.50 | 0.045 | 0.005 | 0.04 | 0.0022 | 0.80 | - | 2.54 | 0.53 | Comparative steel |
| Y | 0.035 | 0.25 | 1.52 | 0.006 | 0.004 | 0.04 | 0.0035 | 0.78 | - | 2.53 | 0.51 | Comparative steel |
| Z | 0.024 | 0.01 | 1.51 | 0.008 | 0.004 | 0.04 | 0.0024 | 0.57 | - | 2.25 | 0.38 | Invention steel |
| AA | 0.023 | 0.01 | 1.61 | 0.008 | 0.004 | 0.04 | 0.0024 | 0.63 | - | 2.43 | 0.39 | Invention steel |
| BB | 0.030 | 0.01 | 1.40 | 0.022 | 0.004 | 0.04 | 0.0024 | 0.55 | B:0.0028 | 2.12 | 0.39 | Invention steel |
| CC | 0.031 | 0.01 | 1.40 | 0.010 | 0.004 | 0.04 | 0.0024 | 0.57 | B:0.0018, Ti:0.003 | 2.14 | 0.41 | Invention steel |

**Table 2**

| Steel sheet No. | Steel No. | Annealing condition | | | | Presence of alloying treatment | Microstructure | | | | | Mechanical properties | | | | Remarks |
|---|---|---|---|---|---|---|---|---|---|---|---|---|---|---|---|---|
| | | Heating rate (°C/sec) | AT (°C) | Primary cooling rate (°C/sec) | Secondary cooling rate (°C/sec) | | Area ratio of second phase (%) | Average grain diameter of second phase (µm) | Area ratio of pearlite and/or bainite in second phase (%) | Area ratio of second phase grain of less than 0.8 µm in diameter (%) | Ferrite grain diameter (µm) | YP (MPa) | TS (MPa) | YR (%) | ΔYP (MPa) | |
| 1 | A | 1.5 | 740 | 5 | 30 | Yes | 1 | 1.1 | 15 | 10 | 9 | 225 | 428 | 53 | - | Comparative example |
| 2 | | 1.5 | 775 | 5 | 30 | Yes | 3 | 1.3 | 15 | 10 | 9 | 202 | 440 | 46 | 11 | Invention example |
| 3 | | 1.5 | 800 | 5 | 30 | Yes | 4 | 1.3 | 18 | 9 | 10 | 206 | 442 | 47 | - | Invention example |
| 4 | | 1.5 | 850 | 5 | 30 | Yes | 4 | 1.4 | 25 | 8 | 11 | 230 | 432 | 53 | - | Comparative example |
| 5 | | 1.5 | 775 | 5 | 30 | No | 3 | 1.3 | 15 | 10 | 9 | 196 | 440 | 45 | 8 | Invention example |
| 6 | | 5.0 | 775 | 5 | 30 | Yes | 3 | 1.2 | 15 | 15 | 9 | 214 | 444 | 48 | 18 | Comparative example |
| 7 | | 5.0 | 800 | 2 | 30 | No | 3 | 1.2 | 12 | 17 | 9 | 208 | 435 | 48 | 18 | Comparative example |
| 8 | B | 1.5 | 775 | 4 | 30 | Yes | 5 | 1.0 | 4 | 14 | 8 | 203 | 442 | 46 | 15 | Invention example |
| 9 | | 5.0 | 775 | 4 | 30 | Yes | 5 | 0.9 | 4 | 18 | 8 | 212 | 449 | 47 | 19 | Comparative example |
| 10 | C | 1.5 | 740 | 4 | 30 | Yes | 1 | 1 | 3 | 10 | 8 | 213 | 435 | 49 | - | Comparative example |
| 11 | | 0.8 | 775 | 4 | 30 | Yes | 5 | 1.3 | 3 | 8 | 10 | 194 | 451 | 43 | 6 | Invention example |
| 12 | | 1.5 | 775 | 4 | 30 | Yes | 5 | 1.2 | 3 | 9 | 9 | 195 | 451 | 43 | 8 | Invention example |
| 13 | | 2.8 | 775 | 4 | 30 | Yes | 5 | 1.2 | 3 | 13 | 8 | 203 | 453 | 45 | 10 | Invention example |
| 14 | | 15 | 775 | 4 | 30 | Yes | 5 | 1.2 | 3 | 23 | 8 | 219 | 460 | 48 | 20 | Comparative example |
| 15 | | 1.5 | 800 | 4 | 30 | Yes | 6 | 1.4 | 6 | 9 | 9 | 197 | 451 | 44 | - | Invention example |
| 16 | | 1.5 | 775 | 2 | 30 | Yes | 4 | 0.8 | 22 | 14 | 9 | 217 | 443 | 49 | 20 | Comparative example |
| 17 | | 1.5 | | 12 | 30 | Yes | 6 | 1.6 | 5 | 9 | 9 | 203 | 457 | 44 | 10 | Invention example |
| 18 | | 1.5 | | 45 | 30 | Yes | 7 | 2.0 | 20 | 7 | 9 | 226 | 470 | 48 | 24 | Comparative example |
| 19 | | 1.5 | | 4 | 3 | Yes | 4 | 1.1 | 25 | 15 | 9 | 223 | 438 | 51 | 20 | Comparative example |
| 20 | | 1.5 | | 4 | 30 | No | 5 | 1.3 | 0 | 9 | 9 | 193 | 452 | 43 | 6 | Invention example |
| 21 | D | 1 | 775 | 4 | 30 | Yes | 5 | 1.3 | 0 | 8 | 10 | 188 | 447 | 42 | 7 | Invention example |
| 22 | | 15 | 775 | 4 | 30 | Yes | 5 | 1.1 | 0 | 20 | 9 | 212 | 455 | 47 | 17 | Comparative example |
| 23 | E | 0.8 | 790 | 5 | 30 | Yes | 4 | 2.4 | 2 | 6 | 12 | 182 | 422 | 43 | 5 | Invention example |
| 24 | | 1.5 | 790 | 5 | 30 | Yes | 4 | 2.3 | 3 | 8 | 12 | 184 | 424 | 43 | 5 | Invention example |
| 25 | | 2.5 | 790 | 5 | 30 | Yes | 4 | 2.1 | 3 | 11 | 11 | 186 | 426 | 44 | 8 | Invention example |

**Table 3**

| Steel sheet No. | Steel No. | Annealing condition | | | | Presence of alloying treatment | Microstructure | | | | | Mechanical properties | | | | Remarks |
|---|---|---|---|---|---|---|---|---|---|---|---|---|---|---|---|---|
| | | Heating rate (°C/sec) | AT (°C) | Primary cooling rate (°C/sec) | Secondary cooling rate (°C/sec) | | Area ratio of second phase (%) | Average grain diameter of second phase (µm) | Area ratio of pearlite and/or bainite in second phase (%) | Area ratio of second phase grain of less than 0.8 µm in diameter (%) | Ferrite grain diameter (µm) | YP (MPa) | TS (MPa) | YR (%) | ΔYP (MPa) | |
| 26 | F | 1.5 | 805 | 5 | 30 | Yes | 6 | 5.1 | 2 | 3 | 13 | 182 | 386 | 47 | 5 | Invention example |
| 27 | G | 1.5 | 775 | 6 | 30 | Yes | 2 | 1.1 | 2 | 12 | 8 | 193 | 430 | 45 | 10 | Invention example |
| 28 | H | 1.5 | 775 | 4 | 30 | Yes | 3 | 1.3 | 3 | 10 | 10 | 186 | 431 | 43 | 8 | Invention example |
| 29 | I | 1.5 | 775 | 4 | 30 | Yes | 11 | 1.3 | 2 | 9 | 9 | 219 | 495 | 44 | 20 | Invention example |
| 30 | J | 1.5 | 775 | 7 | 30 | Yes | 19 | 1.3 | 3 | 8 | 8 | 262 | 594 | 44 | 32 | Invention example |
| 31 | K | 1.5 | 775 | 4 | 30 | Yes | 5 | 1.3 | 2 | 9 | 9 | 194 | 457 | 42 | 8 | Invention example |
| 32 | L | 1.5 | 770 | 4 | 30 | Yes | 4 | 1.5 | 2 | 8 | 10 | 184 | 436 | 42 | 6 | Invention example |
| 33 | M | 1.5 | 775 | 4 | 30 | Yes | 5 | 1.1 | 2 | 12 | 9 | 202 | 459 | 44 | 10 | Invention example |
| 34 | N | 1.5 | 775 | 4 | 30 | Yes | 5 | 1.2 | 2 | 10 | 10 | 196 | 455 | 43 | 9 | Invention example |
| 35 | O | 1.5 | 775 | 4 | 30 | Yes | 5 | 1.0 | 2 | 13 | 8 | 204 | 459 | 44 | 12 | Invention example |
| 36 | P | 1.5 | 775 | 4 | 30 | Yes | 5 | 1.2 | 35 | 10 | 8 | 230 | 440 | 52 | 20 | Comparative example |
| 37 | | 5.0 | 775 | 4 | 30 | Yes | 5 | 1.2 | 35 | 15 | 8 | 240 | 446 | 54 | 25 | Comparative example |
| 38 | | 5.0 | 775 | 4 | 30 | No | 5 | 1.2 | 20 | 15 | 8 | 230 | 446 | 52 | 20 | Comparative example |
| 39 | Q | 1.5 | 770 | 4 | 20 | Yes | 4 | 0.8 | 6 | 18 | 9 | 218 | 453 | 48 | 20 | Comparative example |
| 40 | | 5.0 | 770 | 4 | 20 | Yes | 4 | 0.8 | 5 | 25 | 8 | 230 | 465 | 49 | 30 | Comparative example |
| 41 | | 5.0 | 770 | 4 | 20 | No | 4 | 0.8 | 5 | 25 | 8 | 228 | 467 | 49 | 24 | Comparative example |
| 42 | R | 2.0 | 775 | 4 | 20 | Yes | 4 | 0.8 | 5 | 16 | 8 | 217 | 455 | 48 | 18 | Comparative example |
| 43 | S | 1.5 | 775 | 4 | 20 | Yes | 1 | 1.1 | 0 | 10 | 10 | 265 | 418 | 63 | 24 | Comparative example |
| 44 | T | 1.5 | 775 | 4 | 20 | Yes | 10 | 1.0 | 10 | 18 | 8 | 238 | 492 | 48 | 40 | Comparative example |
| 45 | T | 5.0 | 775 | 4 | 20 | Yes | 10 | 0.9 | 10 | 22 | 8 | 250 | 505 | 50 | 54 | Comparative example |
| 46 | U | 1.5 | 775 | 7 | 20 | Yes | 18 | 1.0 | 10 | 16 | 8 | 290 | 603 | 48 | 48 | Comparative example |
| 47 | V | 1.5 | 770 | 4 | 20 | Yes | 4 | 2.2 | 21 | 8 | 13 | 215 | 416 | 52 | 20 | Comparative example |
| 48 | V | 5.0 | 770 | 4 | 20 | Yes | 4 | 1.9 | 21 | 8 | 13 | 224 | 422 | 53 | 26 | Comparative example |
| 49 | W | 1.5 | 800 | 6 | 30 | Yes | 4 | 4.5 | 25 | 6 | 14 | 200 | 370 | 54 | 18 | Comparative example |
| 50 | X | 1.5 | 775 | 4 | 20 | Yes | 4 | 1.7 | 6 | 10 | 9 | 228 | 458 | 50 | 6 | Comparative example |
| 51 | Y | 1.5 | 775 | 4 | 20 | Yes | 4 | 1.7 | 4 | 10 | 9 | 216 | 450 | 48 | 6 | Comparative example |
| 52 | Z | 1.5 | 775 | 4 | 20 | Yes | 4 | 1.3 | 13 | 10 | 9 | 198 | 445 | 44 | 9 | Invention example |
| 53 | AA | 1.5 | 775 | 4 | 20 | Yes | 4 | 1.2 | 2 | 11 | 9 | 194 | 446 | 43 | 9 | Invention example |
| 54 | BB | 1.5 | 775 | 4 | 20 | Yes | 4 | 1.5 | 1 | 8 | 11 | 188 | 445 | 42 | 7 | Invention example |
| 55 | CC | 1.5 | 775 | 4 | 20 | Yes | 4 | 1.5 | 0 | 8 | 11 | 190 | 448 | 42 | 7 | Invention example |

### EXAMPLE 2

The slab having the composition of Steel No. C shown in Table 1 was heated to 1200°C, hot-rolled at a finish rolling temperature of 830°C, maintained for various times shown in Table 4 to control the cooling start time, cooled to 600 °C at various cooling rates shown in Table 4, and coiled at the coiling temperature CT shown in Table 4. Each of the resultant hot-rolled band was cold-rolled with a rolling rate of 77% and, in CGL, heated at a heating rate of 1.5 °C/sec, annealed at 775°C, cooled at an average primary cooling rate of 4 °C/sec, galvanized, alloyed at 520°C for 20 seconds, and then cooled at an average secondary cooling rate of 30 °C/sec. JIS No. 5 tensile test pieces were collected from the result steel sheet in the rolling direction, the perpendicular direction (C direction), and the direction at 45° with the rolling direction and subject to a tensile test.

The results are shown in Table 4.

When rapid cooling is started at the cooling rate of 40 °C/sec or more within 3 seconds after finish rolling, YP in the direction at 45° with the rolling direction is decreased. The steel sheet of an example of the present invention which has extremely low YP in the direction at 45° with the rolling direction and which is obtained by controlling the hot rolling conditions can possibly effectively decrease surface distortion in the surrounding of a door knob.

**Table 4**

| Steel sheet No. | Steel No. | Hot rolling condition | | | Mechanical properties | | | Remarks |
|---|---|---|---|---|---|---|---|---|
| | | Cooling start time (sec) | Cooling rate (°C/sec) | CT (°C) | YP_{D} (MPa) | YP_{C} (MPa) | YP_{D}-YP_{C} (MPa) | |
| 56 | C | 2.2 | 20 | 530 | 195 | 188 | 7 | Invention example |
| 57 | | 2.2 | 40 | 530 | 192 | 190 | 2 | Invention example |
| 58 | | 2.2 | 70 | 500 | 191 | 196 | -5 | Invention example |
| 59 | | 2.2 | 150 | 490 | 189 | 196 | -7 | Invention example |
| 60 | | 5 | 40 | 540 | 193 | 187 | 6 | Invention example |

## Claims

1. A high-strength galvanized steel sheet comprising steel having a composition consisting of, by % by mass, 0.01 to 0.12% of C, 0.2% or less of Si, less than 2% of Mn, 0.04% or less of P, 0.02% or less of S, 0.3% or less of sol. Al, 0.01% or less of N, and over 0.3% to 2% of Cr, optionally further at least one of 0.005% or less of B, 0.15% or less of Mo, 0.2% or less of V, less than 0.014% of Ti, less than 0.01% of Nb, 0.3% or less of Ni, and 0.3% or less of Cu, and which satisfies 2.1 ≤ [Mneq] ≤ 3 and 0.24 ≤ [%Cr]/[%Mn], the balance being composed of iron and inevitable impurities, the steel having a microstructure consisting of ferrite and as a second phase martensite, pearlite, bainite, retained γ, and carbides, wherein the area ratio of the second phase is 2 to 25%, the area ratio of pearlite or bainite in the second phase is 0% to less than 20%, the average grain diameter of the second phase is 0.9 to 7 µm, and the area ratio of grains with a grain diameter of less than 0.8 µm in the second phase is less than 15%, wherein [Mneq] represents the Mn equivalent shown by [Mneq] = [%Mn] + 1.3[%Cr] and [%Mn] and [%Cr] represent the contents of Mn and Cr, respectively.

2. The high-strength galvanized steel sheet according to Claim 1, wherein 2.2 < [Mneq] < 2.9 is satisfied.

3. The high-strength galvanized steel sheet according to Claim 1 or 2, wherein 0.34 ≤ [%Cr]/[%Mn] is satisfied.

4. A method for producing a high-strength galvanized steel sheet according to any one of claims 1 to 3, comprising hot-rolling and cold-rolling a steel slab having the composition according to any one of Claims 1 to 3, heating at an average heating rate of less than 3 °C/sec in a temperature range of 680°C to 740°C in a continuous galvanizing line (CGL), annealing at an annealing temperature of over 740°C to less than 820°C, cooling from the annealing temperature at an average cooling rate of 3 to 20 °C/sec to the temperature of a galvanization bath kept at 450-500°C, dipping in the galvanization bath or dipping in the galvanization bath and further alloying the coating at a temperature of 500-650°C for 30 seconds or less, and then cooling at an average cooling rate of 7 to 100 °C/sec.

5. The method for producing the high-strength galvanized steel sheet according to Claim 4, wherein heating is performed at an average heating rate of less than 2 °C/sec in a temperature range of 680°C to 740°C in the CGL.

6. The method for producing the high-strength galvanized steel sheet according to Claim 4 or 5, wherein hot rolling is performed by starting cooling within 3 seconds after hot rolling, cooling to 600°C or less at an average cooling rate of 40 °C/sec or more, and coiling at a coiling temperature of 400°C to 600°C, and then cold rolled with a rolling reduction of 70 to 85%

## Patentansprüche

1. Ein hochfestes galvanisiertes Stahlblech, umfassend Stahl mit einer Zusammensetzung, bestehend aus, % der Masse, 0,01 bis 0,12% C, 0,2% oder weniger Si, weniger als 2% Mn, 0,04% oder weniger P, 0,02% oder weniger S, 0,3% oder weniger von sol. Al, 0,01% oder weniger N und über 0,3% bis 2% Cr, gegebenenfalls weiterhin mindestens eines von 0,005% oder weniger B, 0,15% oder weniger Mo, 0,2% oder weniger V, weniger als 0,014% aus Ti, weniger als 0,01% Nb, 0,3% oder weniger Ni und 0,3% oder weniger Cu, und was 2,1 ≤ [Mneq] ≤ 3 und 0,24 ≤ [% Cr] / [% Mn] erfüllt, wobei das Gleichgewicht aus Eisen und unvermeidbaren Verunreinigungen besteht, wobei der Stahl eine Mikrostruktur aufweist, die aus Ferrit besteht und als eine zweite Phase Martensit, Perlit, Bainit, Rest γ und Carbide enthält, wobei das Flächenverhältnis der zweiten Phase 2 bis 25% beträgt, das Flächenverhältnis von Perlit oder Bainit in der zweiten Phase beträgt 0% bis weniger als 20%, der mittlere Korndurchmesser der zweiten Phase beträgt 0,9 bis 7 µm und das Flächenverhältnis der Körner mit einem Korndurchmesser von weniger als 0,8 µm in der zweiten Phase beträgt weniger als 15%, wobei [Mneq] das Mn-Äquivalent darstellt, das durch [Mneq] = [% Mn] + 1,3 [% Cr] und beziehungsweise [% Mn] und [% Cr] den Gehalt an Mn und Cr darstellt.

2. Das hochfeste galvanisierte Stahlblech nach Anspruch 1, wobei 2,2 < [Mneq] <2,9 erfüllt ist.

3. Das hochfeste galvanisierte Stahlblech nach Anspruch 1 oder 2, wobei 0.34 ≤ [%Cr]/[%Mn] erfüllt ist.

4. Ein Verfahren zur Herstellung eines hochfesten galvanisierten Stahlblechs nach einem der Ansprüche 1 bis 3, umfassend das Warmwalzen und Kaltwalzen einer Stahlbramme mit der Zusammensetzung nach einem der Ansprüche 1 bis 3, Erhitzen bei einer durchschnittlichen Erwärmungsgeschwindigkeit von weniger als 3°C/s in einem Temperaturbereich von 680°C bis 740°C in einer kontinuierlichen Galvanisierungslinie (CGL), Glühen bei einer Glühtemperatur von über 740 ° C auf weniger als 820 ° C, Abkühlen aus der Glühtemperatur bei einer mittleren Kühlrate von 3 bis 20°C/s auf die Temperatur eines auf 450-500°C gehaltenen Galvanisierungsbades, Eintauchen in das Galvanisierungsbad oder Eintauchen in das Galvanisierungsbad und weiteres Legieren der Beschichtung bei einer Temperatur von 500 bis 650°C für 30 Sekunden oder weniger und dann Abkühlen mit einer durchschnittlichen Kühlrate von 7 bis 100°C/s.

5. Das Verfahren zur Herstellung des hochfesten galvanisierten Stahlblechs nach Anspruch 4, wobei das Erhitzen bei einer durchschnittlichen Erwärmungsgeschwindigkeit von weniger als 2°C/s in einem Temperaturbereich von 680°C bis 740°C in der CGL durchgeführt wird.

6. Das Verfahren zur Herstellung des hochfesten galvanisierten Stahlblechs nach Anspruch 4 oder 5, wobei das Warmwalzen durchgeführt wird, indem das Abkühlen innerhalb von 3 Sekunden nach dem Warmwalzen begonnen wird, das Abkühlen auf 600°C oder weniger bei einer durchschnittlichen Kühlrate von 40°C/s oder mehr, und Wickeln bei einer Wickeltemperatur von 400°C bis 600°C, und dann kaltgewalzt mit einer Walzreduktion von 70 bis 85%.

## Revendications

1. Tôle d'acier galvanisée à haute résistance comprenant de l'acier ayant une composition constituée, en % en masse, de 0,01 % à 0,12 % de C, 0,2 % ou moins de Si, moins de 2 % de Mn, 0,04 % ou moins de P, 0,02 % ou moins de S, 0,3 % ou moins d'Al sol., 0,01 % ou moins de N et de plus de 0,3 % à 2 % de Cr, éventuellement en outre au moins l'un de 0,005 % ou moins de B, 0,15 % ou moins de Mo, 0,2 % ou moins de V, moins de 0,014 % de Ti, moins de 0,01 % de Nb, 0,3 % ou moins de Ni et 0,3 % ou moins de Cu, et qui satisfait à 2,1 ≤ [Mneq] ≤ 3 et 0,24 ≤ [%Cr]/[%Mn], le reste étant constitué de fer et d'impuretés inévitables, l'acier ayant une microstructure constituée de ferrite et en tant que seconde phase de martensite, perlite, bainite, y résiduelle et carbures, où le rapport surfacique de la seconde phase va de 2 à 25 %, le rapport surfacique de perlite ou de bainite dans la seconde phase va de 0 % à moins de 20 %, le diamètre de grain moyen de la seconde phase va de 0,9 à 7 µm et le rapport surfacique des grains avec un diamètre de grain inférieur à 0,8 µm dans la seconde phase est inférieur à 15 %, où [Mneq] représente l'équivalent en Mn décrit par [Mneq] = [%Mn] + 1,3[%Cr] et [%Mn] et [%Cr] représentent respectivement les teneurs en Mn et Cr.

2. Tôle d'acier galvanisée à haute résistance selon la revendication 1, où 2,2 < [Mneq] < 2,9 est satisfaite.

3. Tôle d'acier galvanisée à haute résistance selon la revendication 1 ou 2, où 0,34 ≤ [%Cr]/[%Mn] est satisfaite.

4. Procédé de production d'une tôle d'acier galvanisée à haute résistance selon l'une quelconque des revendications 1 à 3, comprenant un laminage à chaud et un laminage à froid d'une brame d'acier ayant la composition selon l'une quelconque des revendications 1 à 3, un chauffage à une vitesse de chauffage moyenne inférieure à 3 °C/s dans une plage de température de 680 °C à 740 °C dans une ligne de galvanisation en continu (CGL), un recuit à une température de recuit de plus de 740 °C à moins de 820 °C, un refroidissement depuis la température de recuit à une vitesse de refroidissement moyenne de 3 à 20 °C/s jusqu'à la température d'un bain de galvanisation maintenu à 450-500 °C, un trempage dans le bain de galvanisation ou un trempage dans le bain de galvanisation suivi d'une alliation du revêtement à une température de 500-650 °C pendant 30 secondes ou moins, puis un refroidissement à une vitesse de refroidissement moyenne de 7 à 100 °C/s.

5. Procédé de production de la tôle d'acier galvanisée à haute résistance selon la revendication 4, dans lequel le chauffage est effectué à une vitesse de chauffage moyenne inférieure à 2 °C/s dans une plage de température de 680 °C à 740 °C dans la CGL.

6. Procédé de production d'une tôle d'acier galvanisée à haute résistance selon la revendication 4 ou 5, dans lequel le laminage à chaud est effectué en commençant le refroidissement dans un délai de 3 secondes après le laminage à chaud, le refroidissement à 600 °C ou moins à une vitesse de refroidissement moyenne de 40 °C/s ou plus et l'enroulement à une température d'enroulement de 400 °C à 600 °C, puis laminée à froid avec un taux de réduction par laminage de 70 à 85 %.
